Europäisches Patentamt

**European Patent Office**

**Office européen des brevets**

(19)

(11) Veröffentlichungsnummer: **0 211 253**
**B1**

(12) **EUROPÄISCHE PATENTSCHRIFT**

(45) Veröffentlichungstag der Patentschrift:
24.05.89

(51) Int. Cl.⁴: **F 01 P 3/18, B 60 K 11/04**

(21) Anmeldenummer: **86109314.4**

(22) Anmeldetag: **08.07.86**

(54) Elastische Halterungsanordnung für Kühler von Brennkraftmaschinen, insbesondere in Kraftfahrzeugen.

(30) Priorität: **01.08.85 DE 3527666**

(43) Veröffentlichungstag der Anmeldung:
**25.02.87 Patentblatt 87/9**

(45) Bekanntmachung des Hinweises auf die Patenterteilung:
**24.05.89 Patentblatt 89/21**

(84) Benannte Vertragsstaaten:
**DE FR GB IT SE**

(56) Entgegenhaltungen:
**EP-A- 0 052 291**
**EP-B- 0 046 566**
**DE-A- 2 634 990**
**DE-A- 2 706 473**
**DE-C- 1 211 501**
**GB-A- 1 456 558**
**GB-A- 2 132 951**

**DUBBEL-TASCHENBUCH FUR DEN MASCHINENBAU, N.Y., 1981, Seite 329, 14. Ausgabe, Springer Verlag, Berlin, Heidelberg, New-York**

(73) Patentinhaber: **BAYERISCHE MOTOREN WERKE Aktiengesellschaft, Postfach 40 02 40 Petuelring 130 - AJ-36, D-8000 München 40 (DE)**

(72) Erfinder: **Tauber, Karl, Schleissheimer Strasse 183 a, D-8000 München 40 (DE)**

(74) Vertreter: **Schweiger, Erwin et al, c/o Bayerische Motoren Werke AG -**
**AJ-35 Postfach 40 02 40 Petuelring 130, D-8000 München 40 (DE)**

## Beschreibung

Elastische Halterungsanordnung für Kühler von Brennkraftmaschinen, insbesondere in Kraftfahrzeugen.

Die Erfindung betrifft eine elastische Halterungsanordnung für Kühler mit einer Bauart gemäß den Merkmalen des Oberbegriffs von Anspruch 1, bzw. 2.

Aus der GB-A 1 456 558 ist eine gattungsgemäße Halterungsanordnung bekannt. Dadurch, daß der Haltebügel einerseits direkt an der Karosserie und andererseits über metallische Verbindungselemente unter Zwischenschaltung von Gummipuffern mit dem Kühler verbunden ist, existieren mehrere metallische Verbindungsstellen, die beim Betrieb einer derartigen Halterungsanordnung zur Korrosion führen können. Auch ist der Aufbau des Haltebügels fertigungsintensiv.

Aufgabe der Erfindung ist es, eine Halterungsanordnung der vorliegenden Bauart zu schaffen, die zugleich fertigungsgünstig, nicht korrosionsgefährdet und einfach zusammenbaubar ist.

Zur Lösung dieser Aufgabe sieht die Erfindung bei der vorliegenden Bauart die kennzeichnenden Merkmale des Anspruchs 1 oder des nebengeordneten Anspruchs 2 vor. Dadurch kann der Haltbügel einfach durch Formpressen oder Spritzen aus Blech bzw. Kunststoff hergestellt werden, der oder die Puffer am Haltebügel angesteckt und dieser in einfacher Weise von oben an den Kühler und die Gegen-Anlagefläche herangeführt und über den Klemmbügel befestigt werden. Da gegenseitige metallische Kontaktflächen vermieden werden, ist auch die Korrosionsgefahr weitgehendst beseitigt. Die Befestigung des Haltebügels an der Gegen-Anlagefläche mit Hilfe des Klemmbügels kann hierbei sowohl als Rast-, Klammer- oder Schraubverbindung ausgeführt sein.

Die Ansprüche 3 - 10 enthalten weiterbildende Merkmale. Hierbei beschreiben die Ansprüche 3 und 4 vorteilhafte Anwendungen an sich bekannter Merkmale bei der Erfindung. Anspruch 5 zeigt eine besonders vorteilhafte Ausbildung der Verbindungsstelle zwischen der Kühleroberseite und dem Haltebügel auf.

Die Weiterbildung nach Anspruch 6 enthält eine besonders vorteilhafte Ausgestaltung einer Schraubverbindung für die Verbindungsstelle zwischen dem Haltebügel und der Gegen-Anlagefläche. Hierbei kann der Klemmbügel nach der Ausgestaltung nach Anspruch 1 an den Haltebügel einstückig angeformt sein. Bei der Ausgestaltung der Erfindung nach Anspruch 2 wird er hingegen als separates Bauteil ausgebildet. Auch in diesem Fall ist sichergestellt, daß eine metallische Berührung zwischen dem Haltebügel und der Gegen-Anlagefläche vermieden wird.

Die Merkmale des Anspruches 7 enthalten eine Ausbildung des Haltebügels mit paarweise einander zugeordneten je einem Puffer und je einem Klemmbügel und mit fertigungs- und festigkeitsgerechter Formgebung des Haltebügels mit Bezug auf die Kraftübertragung von den Puffern zu den Klemmbügeln.

Die Ansprüche 8 und 9 beinhalten eine Ausbildung des Haltebügels, die durch einfaches Heranführen desselben und Festziehen der Befestigung ein Verspannen der gesamten Halterungsanordnung durch die Zuordnung von Bauteil- und Kühler-Anlageflächen bewirkt.

Anspruch 10 enthält die besonders vorteilhafte Ausbildung des Haltebügels als Kunststoff-Formteil mit für die Ausformbarkeit günstig gestalteten Aufnahmen für Puffer und Ausbildungen der Muttergewinde für Klemmschrauben.

In der Zeichnung ist ein Ausführungsbeispiel der Erfindung dargestellt. Es zeigen:

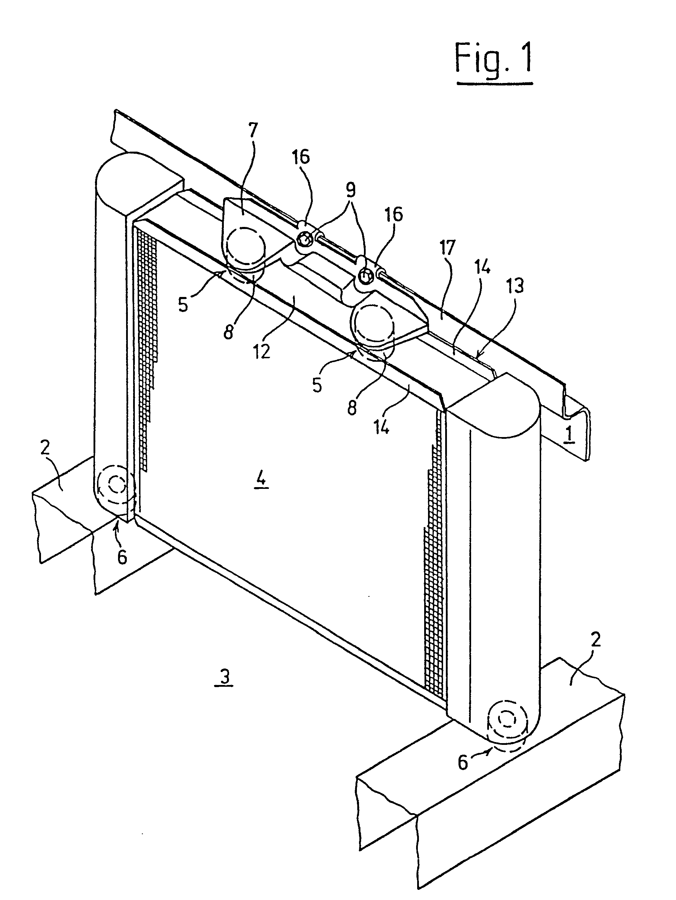

Fig. 1 eine Ansicht einer Kühleranordnung in einer Begrenzungswand eines Motorraumes mit oberen und unteren elastischen Lagerstellen für den Kühler an diesen benachbarten Bauteilen,

Fig. 2 eine Draufsicht auf die oberen Lagerstellen,

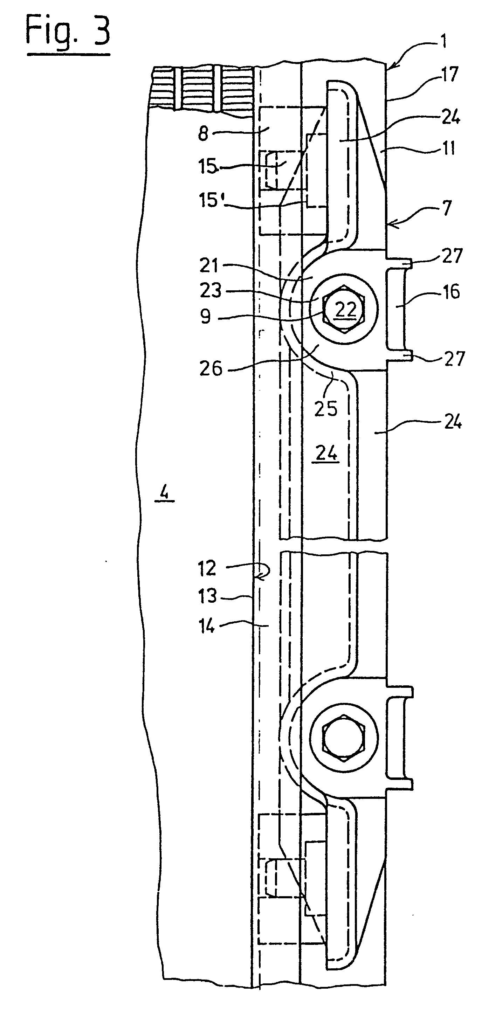

Fig. 3 eine Stirnansicht gemäß Pfeil III in Fig. 2,

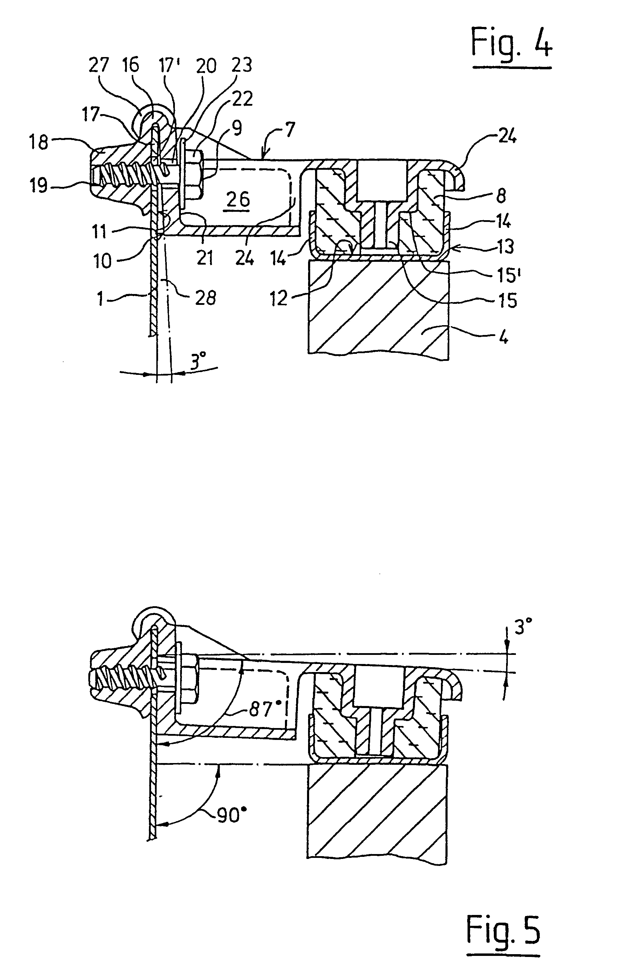

Fig. 4 einen Schnitt durch eine obere Befestigungsstelle gemäß der Linie IV-IV in Fig. 2 mit locker eingeschraubter Klemmschraube und

Fig. 5 den Schnitt entsprechend Fig. 4 mit festgezogener Klemmschraube.

An oberen und unteren Wandungs-Bauteilen 1 und 2 eines Motorraumes 3 innerhalb eines Kraftfahrzeuges, Personenkraftwagens oder sonstigen Aggregat- oder Maschinenraumes ist ein Querstrom-Kühler 4 mittels oberen und unteren elastischen Lagerstellen 5 und 6 befestigt. Über die unteren Lagerstellen 6 stützt sich der Kühler 4 mit seinem Eigengewicht vertikal am unteren Bauteil 2 ab und ist gegen Bewegungen in horizontalen Richtungen formschlüssig darin gehalten. Die oberen Lagerstellen 5 bestehen aus einem Haltebügel 7, zwei kreisringförmigen elastischen Puffern 8 und zwei Klemmschrauben 9.

Der Haltebügel 7 ist als einstückiges Kunststoff-Formteil ausgebildet, das mittels der Klemmschrauben 9 und einer vertikalen Anlagefläche 10 an einer gleichfalls vertikalen Gegen-Anlagefläche 11 am oberen Bauteil 1 befestigt ist. Die Puffer 8 bestehen aus einem Elastomer, wie Gummi oder Kunststoff, und weisen eine kreiszylindrische Außenbegrenzung auf. Sie stützen sich in einer horizontalen Bodenfläche 12 eines oberen U-Profilrahmens 13 des Kühlers 4 unter Vorspannung vertikal ab. Quer zum U-Profilrahmen 13 greifen die Puffer 8 zwischen dessen vertikale Stege 14 mit abgestimmter Bemessung von Außen-Durchmesser der Puffer 8 und Abstand der Stege 14 mit oder ohne Vorspannung ein.

Die Puffer 8 sind am Haltebügel 7 auf angeformten Aufnahmezapfen 15 zentriert, deren Außen-Durchmesser auf den Innen-Durchmesser der Puffer für eine Steckhalterung und eine damit erleichterte Handhabung abgestimmt sind. Zur flächigen Anlage der Puffer 8 sind konzentrisch zu den Zapfen 15 ringförmige Auflageflächen 15' angeformt.

Der Anlagefläche 10 des Haltebügels 7 sind im Bereich der Klemmschrauben 9 je ein Klemmbügel 16 angeformt, die den mit der Gegen-Anlagefläche 11 versehenen Flansch 17 des oberen Bauteiles 1 von oben übergreifen und eine Kunststoff-Klemmutter bilden. Für die selbst gewinde-schneidenden Klemmschrauben 9, z.B. Blechschrauben, enthält der Klemmbügel 16 in einem angeformten Zapfen 18 eine derart bemessene Bohrung 1, daß darin beim Eindrehen der Klemmschrauben 9 je ein Muttergewinde entsteht. In den zugeordneten Stellen der Anlagefläche 10 beziehungsweise des Haltebügels 7 ist je eine Durchgangsbohrung 17' bzw. 20 und eine außenliegende Abstützfläche 21 für den Schraubenkopf 22 über eine Beilagescheibe 23 angeformt.

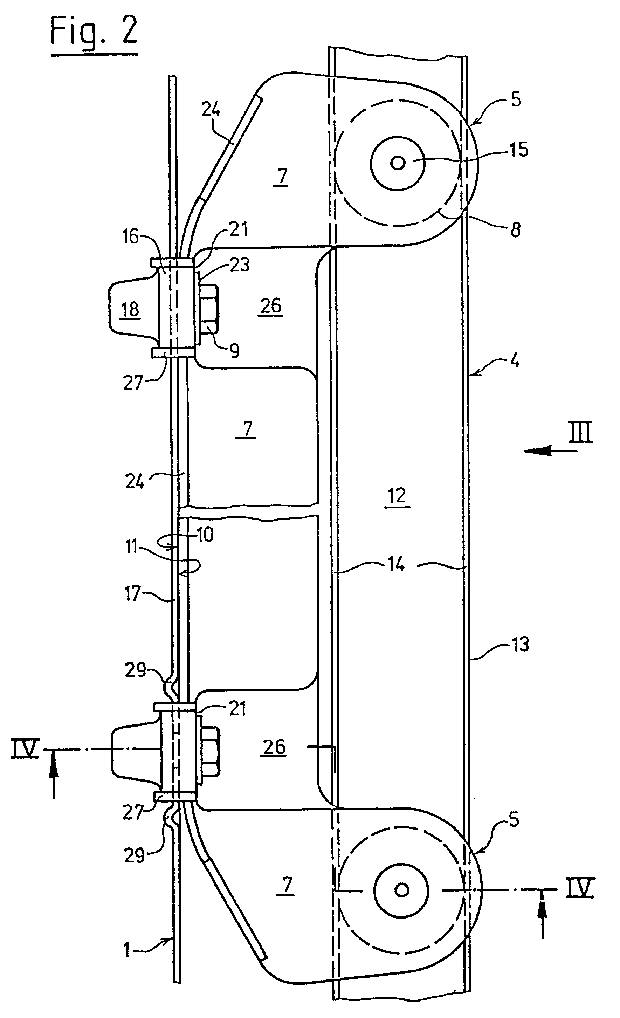

Der Haltebügel 7 weist in der Draufsicht gemäß Fig. 2 eine etwa brillenförmige weitgehend glattflächige und gerundete Form auf, was dem günstigen Bild und der Sicherheit gegen Verletzungen dient.

Zur Versteifung sind die Begrenzungskanten des Haltebügels 7 mit nach unten und entlang der Anlagefläche 10 auch nach obn gerichteten Randflanschen 24 versehen, die Verbindungsbereiche zwischen je einer Abstützfläche 21 für die Klemmschrauben 9 und je einem Zapfen 15 mit Auflagefläche 15' für die Puffer 8 sind zur Kraftübertragung dadurch besonders versteift, daß der Randflansch 24, der den Puffer 8 umgibt, unmittelbar in den etwa vertikalen Rand 25 jeweils einer oberen in Klemmschrauben-Achsrichtung zylindrisch verlaufenden Vertiefung 26 übergeht.

Von dem nach oben gerichteten Randflansch 24 geht im Bereich der Klemmschrauben 9 jeweils ein Klemmbügel 16 mit versteifenden Rand-Aufkantungen 27 aus und bildet mit der Anlagefläche 10 einen Klemmschlitz 28, der der Wandstärke des Flansches 17 am Bauteil 1 im Bereich der Gegen-Anlagefläche 11 angepaßt ist.

Zur Lagesicherung in horizontaler Richtung des Haltebügels 7 am Bauteil 1 weist dieses beiderseits eines Klemmbügels je eine Sicke 29 auf.

Zum Erreichen einer Vorspannung der gesamten Kühler-Halterung sind die Anlagefläche 10 und die Auflageflächen 15' für die Puffer 8 derart um wenige Winkelgrade von z.B. 3° von 90° abweichend zueinander angeordnet, daß beim einfachen Aufstecken des Haltebügels 7 zunächst ein loses Aufliegen der Klemmbügel 16 auf dem Rand des Flansches 17 und der Puffer 8 auf der Bodenfläche 12 mit der entsprechenden Winkelabweichung erreicht wird. Beim Festziehen der Klemmschrauben 9 schwenkt dann der Haltebügel 7 um den Rand des Flansches 17 und erzeugt auf diese Weise ein Verspannen der Puffer 8, des Flansches 17 und der unteren elastischen Lagerstellen 6 gegeneinander. Der Kühler wird dadurch elastisch und sicher gegen zu große Bewegungen aufgrund auftretender Krafteinflüsse, insbesondere durch dynamische Kräfte beim Betrieb von Kraftfahrzeugen, gehalten.

Eine Korrosion-Gefährdung aller Bestandteile der Kühlerhalterung ist einerseits durch die nicht-metallische Ausbildung des Haltebügels 7 einschließlich Klemmbügel 16 und Puffer 8 sowie andererseits durch ein Übermaß der Bohrungen 17' im Flansch 17 des oberen Bauteiles 1 für den Durchtritt der Klemmschrauben 9 weitestgehend ausgeschlossen. Bei einer Ausbildung des Haltebügels 7 als Blech-Formteil ist die gleiche Korrosions-Sicherheit dann erreichbar, wenn die Klemmbügel 16 als Kunststoff-Klemmuttern gesondert in entsprechende Aufnahmen des Blech-Haltebügels eingesetzt werden.

## Patentansprüche

1. Elastische Halterungsanordnung für Kühler von Brennkraftmaschinen, insbesondere in Kraftfahrzeugen, mit unteren, im gegenseitigen Abstand angeordneten elastischen Lagerstellen (6), in denen sich der Kühler (4) vertikal abstützt und horizontal formschlüssig festgelegt ist, und mit einem oberen einstückigen Haltebügel (7), der sich als obere Lagerstelle über elastische Puffer (8) an einer nach oben offenen, eine horizontale Bodenfläche (12) aufweisenden Aussparung (U-Profilrahmen 13) des Kühlers (4) vertikal und gegen Kippbewegungen des Kühlers (4) um seine unteren Lagerstellen (6) horizontal abstützt und der ferner an einem der oberen Begrenzung des Kühlers (4) benachbarten Bauteil über eine vertikale Anlagefläche (10) befestigt ist, dadurch gekennzeichnet, daß der Haltebügel (7) als einstückiges Kunststoff-Formteil ausgebildet ist, das an seiner der Aussparung (U-Profilrahmen 13) des Kühlers (4) zugewandten Unterseite eine Aufnahme für Puffer (8) aufweist, daß das dem Kühler (4) benachbarte Bauteil (1) eine vertikale Gegen-Anlagefläche (11) mit einer Öffnung (Bohrung 17') aufweist, und daß der Anlagefläche (10) des Haltebügels (7) ein nichtmetallischer Klemmbügel zugeordnet ist, der den Flansch (17) des Bauteils (1) von oben übergreift und mittels einem Befestigungselement (Klemmschraube 9) den Haltebügel (7) gegen den Flansch (17) derart verspannt, daß gegenseitige metallische Kontaktflächen vermieden sind.

2. Elastische Halterungsanordnung für Kühler von Brennkraftmaschinen, insbesondere in Kraftfahrzeugen, mit unteren, im gegenseitigen Abstand angeordneten elastischen Lagerstellen (6), in denen sich der Kühler (4) vertikal abstützt und horizontal formschlüssig festgelegt ist, und mit einem oberen als einstückiges Blechformteil ausgebildeten Haltebügel (7), der sich als obere Lagerstelle (5) über elastische Puffer (8) in einer nach oben offenen, eine horizontale Bodenfläche (12) aufweisenden Aussparung (U-Profilrahmen 13) des Kühlers (4) vertikal und gegen Kippbewegungen des Kühlers (4) um seine unteren Lagerstellen (6) horizontal abstützt und der ferner an einem der oberen Begrenzung des Kühlers (4) benachbarten Bauteil über eine vertikale Anlagefläche (10) befestigt ist, dadurch gekennzeichnet, daß der Haltebügel an seiner der Aussparung (U-Profilrahmen 13) des Kühlers (4) zugewandten Unterseite eine Aufnahme für Puffer (8) aufweist, daß der Anlagefläche (10) des Haltebügels (7) ein nichtmetallischer Klemmbügel (16) zugeordnet ist und daß das dem Kühler (4) benachbarte Bauteil (1) eine vertikale Gegenanlagefläche (11) mit einer Öffnung (Bohrung 17') aufweist, die der Klemmbügel (16) von oben übergreift und daß mittels einem Befestigungselement (Klemmschraube 9) der Haltebügel (7) über den Klemmbügel (16) gegen die Gegenanlagefläche (11) derart verspannt ist, daß gegenseitige metallische Kontaktflächen vermieden sind.

3. Halterungsanordnung nach Anspruch 1 und 2, dadurch gekennzeichnet, daß die Aufnahme als Zapfen (15) ausgebildet ist, der in eine Bohrung des Puffers (8) eingreift.

4. Halterungsanordnung nach einem der vorangegangenen Ansprüche, dadurch gekennzeichnet, daß die Aussparung des Kühlers (4) von einem oberen, nach oben offenen U-Profilrahmen (13) eines Querstrom-Kühlers gebildet ist.

5. Halterungsanordnung nach einem der vorangegangenen Ansprüche, dadurch gekennzeichnet, daß der Puffer (8) kreisringförmig mit zylindrischer Außenfläche ausgebildet ist, dessen Außendurchmesser auf den Abstand der vertikalen Stege (14) des U-Profilrahmens (13) für einen abgestimmten gegenseitigen Eingriff bemessen ist.

6. Halterungsanordnung nach einem der vorangegangenen Ansprüche, dadurch gekennzeichnet, daß die Klemmvorrichtung einerseits aus einer Schraubendurchgangsbohrung (20) und andererseits aus einem Muttergewinde (Bohrung 19) in je einem Schenkel des Klemmbügels (16) besteht, die eine Klemmschraube (9) aufnehmen und daß die Öffnung (Bohrung 17') in der Gegen-Anlagefläche (11) ein Übermaß zum Schaftdurchmesser der Klemmschrauben (9) aufweist, derart, daß die Maßtoleranzen der gesamten Halterungsanordnung ohne Berührung zwischen Schraubenschaft und Öffnungsrand ausgeglichen werden.

7. Halterungsanordnung nach einem der vorangegangenen Ansprüche, dadurch gekennzeichnet, daß der Haltebügel (7) in gegenseitigem Abstand zwei Puffer (8) und zwei Klemmbügel (16) aufweist und daß die Puffer (8) und die Klemmbügel (16) mittels einer an seiner Oberseite brillenförmig flächigen Gestaltung des Haltebügels (7) und mittels Randflanschen (24) sowie im Verbindungsbereich jeweils eines zueinander benachbart angeordneten Puffers (8) und Klemmbügels (16) angeordneter oberer in Schraubenrichtung zylindrisch eingezogener Vertiefungen (26) verbunden sind, wobei je ein Übergangsbereich zwischen den Vertiefungen (26) und der Oberseite in je einen die Puffer (8) umgreifenden unteren Randflansch (24) mündet, die Klemmbügel (16) mittels an die Anlageflächen (10) anschließende, durchgehende untere und/oder obere Randflansche (24) miteinander und die einander zugewandten Seiten der freien Endbereiche der beiden Vertiefungen (26) durch einen weiteren unteren und/oder oberen Randflansch (24) verbunden sind.

8. Halterungsanordnung nach einem der vorangegangenen Ansprüche, dadurch gekennzeichnet, daß die Anlagefläche (10) und die Gegen-Anlagefläche (11) bei gelöster Befestigung (Klemmschrauben 9) einen spitzen Winkel (3°) derart zueinander aufweisen, daß bei festgezogener Befestigung eine Vorspannung auf das Bauteil (1), den Haltebügel (7), die Puffer (9) und die unteren Lagerstellen (6) wirkt.

9. Halterungsanordnung nach einem der vorangegangenen Ansprüche, dadurch gekennzeichnet, daß die Auflagefläche (15') des Puffers (8) am Haltebügel und/oder die Abstützfläche des Puffers (8) zum Kühler (4) mit der Anlagefläche (10) am Haltebügel (7) einen um wenige Winkelgrade von 90° abweichenden Winkel (3°) einschließt und daß die Gegen-Anlagefläche (11) an dem dem Kühler (4) benachbarten Bauteil (1) mit der Bodenfläche (12) der Aussparung (U-Profilrahmen 13) des Kühlers (4) einen 90°-Winkel einschließt.

10. Halterungsanordnung nach einem der vorangegangenen Ansprüche, dadurch gekennzeichnet, daß der Haltebügel (7) als Kunststoff-Formteil ausgebildet ist, das für einen zylindrisch ringförmigen Puffer (8) einen nach unten gerichteten Aufnahme-Zapfen (15) und zu diesem konzentrisch eine untere horizontale ringförmige Auflagefläche (15') sowie für die lösbare Befestigung eine als Muttergewinde mit einer gewindeschneidenden Schraube (Klemmschraube 9) zusammenwirkende Bohrung (19) in einem Schenkel des Klemmbügels (16) aufweist.

**Claims**

1. A resilient retaining system for radiators of internal combustion engines, more particularly motor vehicles, comprising bottom spaced-apart resilient bearings (6) in which the radiator (4) is vertically supported and positively located horizontally, and a top one-piece retaining clip (7) constituting a top bearing and vertically supported via resilient pads (8) on an upwardly-open, horizontal-based (12) recess (U-section frame 13) in radiator (4) and horizontally supported against tilting of the radiator (4) around its bottom bearings (6) and also secured via a vertical bearing surface (10) to a component adjacent the top boundary of the radiator (4), characterised in that the retaining clip (7) is a one-piece plastics moulded part formed with a receiving means for pads (8) on its underside facing the recess (U-section frame 13) in the radiator (4), the component (1) adjacent the radiator (4) has a vertical abutment surface (11) with an opening (bore 17'), and the bearing surface (10) of the retaining clip (7) is associated with a non-metallic clamp strap which projects from above over the flange 17 of component (1) and, by means of a securing element (clamping screw 9) clamps the retaining clip (7) against flange (17) so as to avoid interacting metal contact surfaces.

2. A resilient retaining system for radiators of internal combustion engines, more particularly in motor vehicles, comprising bottom spaced-apart resilient bearings (6) in which the radiator (4) is vertically supported and horizontally and positively secured, the system comprising a top retaining clip (7) in the form of a one-piece sheet-metal moulded part constituting a top bearing (5) supported via resilient pads (8) in an upwardly-open horizontally-based (12) recess (U-section frame 13) in radiator (4) and horizontally supported against tilting of the radiator (4) around its bottom bearings (6), the clip also being secured via a vertical bearing surface (10) to a component adjacent the top boundary of radiator (4), characterised in that the underside of the retaining clip facing the recess (U-section frame 13) in the radiator (4) has a receiving means for pads (8), the bearing surface (10) of the retaining clip (7) is associated with a non-metallic clamp strap (16), and the component (1) adjacent the cooler (4) has a vertical abutment surface (11) formed with an opening (bore 17') and extending from above over the clamp strap (16) and is braced against the abutment surface (11) via a securing element (clamping screw 9) of clip (7) and via the clamp strap (16) so as to avoid interacting metal contact surfaces.

3. A retaining system according to claims 1 and 2, characterised in that the receiving means is a spigot (15) which engages in a bore in the pad (8).

4. A retaining system according to any of the preceding claims, characterised in that the recess in the radiator (4) is a top upwardly-open U-section frame (13) of a crossflow radiator.

5. A retaining system according to any of the preceding claims, characterised in the pad (8) is circular and has a cylindrical outer surface, the outer diameter of which is dimensioned to match the spacing between the vertical webs (14) of the U-section frame (13) for matched mutual engagement.

6. A retaining system according to any of the prededing claims, characterised in that the clamping device comprises a screw through-bore (20) and also comprises a female thread (bore 19) in each limb of the clamp strap (16) and receiving a clamping screw (9), and the opening (bore 17′) in the abutment surface (11) is overdimensioned relative to the shank diameter of the clamping screws (9), so that dimensional tolerances of the entire retaining system are compensated without contact between the screw shank and the edge of the opening.

7. A retaining system according to any of the preceding claims, characterised in that the rtaining clip (7) has two spaced-apart pads (8) and two clamp straps (16) and the pads (8) and clamp straps (16) are connected by a flat-topped spectacle-like retaining clip (7) and by edge flanges (24) and by top recesses (26) extending cylindrically in the screw direction in the connecting region between each pad (8) and adjacent clamp strap (16), and each transition region between the recesses (26) and the top side opens into a respective bottom edge flange (24) surrounding the pads (8), the clamp straps (16) are interconnected via continuous bottom and/or top edge flanges (24) adjacent the bearing surfaces (10) and the facing sides of the projecting end regions of the two recesses (26) are connected by an additional bottom and/or edge flange (24).

8. A retaining system according to any of the preceding claims, characterised in that the bearing surface (10) and the abutment surface (11), when loosely connected (clamping screws 9) are at an acute angle (3°) to one another so that, when the connection is tightened, a prestress acts on component (1), clip (7), pad (9) and the bottom bearings (6).

9. A retaining system according to any of the preceding claims, characterised in that the bearing surface (15′) of the pad (8) on the retaining clip and/or the bearing surface of pad (8) on radiator (4), include an angle (3°) differing by a few degrees from 90° with bearing surface 10 on the retaining clip (7), and the abutment surface (11) on the component (1) adjacent the radiator (4) includes an angle of 90° with the base (12) of the recess (U-section frame 13) in the radiator (4).

10. A retaining system according to any of the preceding claims, characterised in that the retaining clip (7) is a moulded plastics part comprising a downwardly-extending spigot (15) receiving a cylindrical annular pad (8) and a bottom horizontal annular bearing surface (15′) concentric therewith and also for the purpose of releasable connection is formed with a bore (19) in a limb of the clamp strap (16), the bore being in the form of a female screw thread cooperating with a thread-cutting screw (clamping screw 9).

## Revendications

1. Dispositif de fixation élastique pour radiateur de moteurs à combustion interne, notamment dans des véhicules automobiles, avec des points d'appui inférieurs (6) élastiques disposés écartés les uns des autres, sur lesquels le radiateur (4) s'appuie verticalement et est immobilisé horizontalement avec engagement positif, et avec un étrier de fixation supérieur (7) d'une seule pièce, qui s'appuie verticalement, comme point de fixation supérieur, par l'intermédiaire d'amortisseurs élastiques (8) dans un évidement du radiateur (4) ouvert vers le haut (cadre à profil en U) présentant une surface de plancher (12) horizontale, et horizontalement contre des mouvements oscillants du radiateur (4) autour de ses points d'appui inférieurs (6), et qui est en outre fixé sur un élément de construction voisin du contour supérieur du radiateur (4), par l'intermédiaire d'une surface d'appui verticale (10); caractérisé en ce que l'étrier de fixation (7), a la conformation d'une pièce de forme monobloc en matière plastique, qui présente sur sa face inférieure tournée vers l'évidement (cadre à profil en U 13) du radiateur (4) un logement pour amortisseur (8), que l'élément de construction (1) voisin du radiateur (4) présente une surface d'embase verticale (11) avec une ouverture (perçage 17′), et qu'à la surface d'appui (10) de l'étrier de fixation (7) est associé un étrier de serrage non métallique qui enserre la bride (17) de l'élément (1) par le haut et contraint au moyen d'un élément de fixation (vis de serrage 9) l'étrier de fixation (7) contre la bride (17) de manière à éviter le contact réciproque de surfaces métalliques.

2. Dispositif de fixation élastique pour radiateur de moteurs à combustion interne, notamment dans des véhicules automobiles, avec des points d'appui inférieurs (6) élastiques disposés écartés les uns des autres, sur lesquels le radiateur (4) s'appuie verticalement et est immobilisé horizontalement avec engagement positif, et avec un étrier de fixation supérieur (7) d'une seule pièce en tôle formée, qui s'appuie verticalement comme point de fixation supérieur (5), par l'intermédiaire de tampons élastiques (8), dans un évidement du radiateur (4) ouvert vers le haut (cadre à profil en U 13) présentant une surface de plancher (12) horizontale, et horizontalement contre des mouvements oscillants du radiateur (4) autour de ses points d'appui inférieurs (6), et qui est en outre fixé sur un élément de construction voisin du contour supérieur du radiateur (4), par l'intermédiaire d'une surface d'appui verticale (10); caractérisé en ce que l'étrier de fixation présente sur sa face inférieure tournée vers l'évidement (cadre à profil en U 13) du radiateur (4) un logement pour amortisseur (8), qu'à la surface d'appui (10) de l'étrier de fixation (7) est associé un étrier de serrage (16) non métallique et que l'élément (1) voisin du radiateur (4) présente une surface d'embase (11) verticale avec une ouverture (perçage 17′), qui est enserrée par l'étrier de serrage (16) à partir du haut et qu'au moyen d'un élément de fixation (vis de serrage 9) l'étrier de fixation (7) est serré par l'étrier de serrage (16) contre la surface d'embase (11), de manière à éviter le contact réciproque de surfaces métalliques.

3. Dispositif de fixation suivant les revendications 1 et 2, caractérisé en ce que le logement est réalisé sous la forme d'un ergot (15) qui pénètre dans un perçage de l'amortisseur (8).

4. Dispositif de fixation suivant l'une des revendications précédentes, caractérisé en ce que l'évidement du radiateur (4) est constitué par un cadre supérieur à profil en U (13), ouvert vers le haut, d'un radiateur à circulation transversale.

5. Dispositif de fixation suivant l'une des revendications précédentes, caractérisé en ce que le tampon amortisseur (8) a une configuration en forme de couronne à surface extérieure cylindrique, dont le diamètre extérieur est dimensionné sur l'écartement des bordures (14) du cadre à profil en U (13) pour un ajustement réciproque.

6. Dispositif de fixation suivant l'une des revendications précédentes, caractérisé en ce que le dispositif de serrage est constitué d'une part, d'un perçage de passage de vis (20) et d'autre part, d'un filetage femelle (perçage 19) dans chaque branche de l'étrier de serrage (16), qui reçoivent une vis de serrage (9), et que l'ouverture (perçage 17') dans la surface d'embase (11) présente une surcote pour le diamètre des vis de serrage (9), de manière que les tolérances des cotes de l'ensemble du dispositif de fixation soient compensées sans contact entre la queue de vis et le bord de l'ouverture.

7. Dispositif de fixation suivant l'une des revendications précédentes, caractérisé en ce que l'étrier de fixation (7) présente deux tampons amortisseurs (8) et deux étriers de serrage (16) écartés mutuellement et que l'amortisseur (8) et l'étrier de serrage (16) sont reliés au moyen d'une conformation de l'étrier de fixation (7) plate et en forme de lunettes sur sa face supérieure et au moyen de brides de bordure (24) ainsi que d'évidements (26) supérieurs à forme cylindrique dans le sens des vis disposée dans chaque zone de liaison d'un amortisseur (8) et d'un étrier de serrage (16) placés à proximité l'un de l'autre, chaque zone de transition entre les évidements (26) et la face supérieure débouchant dans une bride de bordure (24) inférieure entourant l'amortisseur (8), les étriers de serrage (16) étant reliés entre eux au moyen de brides de bordure (24) inférieures et/ou supérieures aux surfaces d'appui (10) connexes, et les faces en regard des zones d'extrémités libres des deux évidements (26) étant reliées par une autre bride de bordure (24) inférieure et/ou supérieure.

8. Dispositif de fixation suivant l'une des revendications précédentes, caractérisé en ce que la surface d'appui (10) et la surface d'embase (11) présentent, l'une par rapport à l'autre, grâce à une fixation lâche (vis de serrage 9) un angle aigu (3°) et par une fixation ferme une tension agit sur l'élément de construction (1), l'étrier de fixation (7), l'amortisseur (8) et les positions des coussinets inférieurs (6).

9. Dispositif de fixation suivant l'une des revendications précédentes, caractérisé en ce que la surface d'appui (15') de l'amortisseur (8) sur l'étrier de fixation et/ou la surface d'appui de l'amortisseur (8) sur le radiateur (4) forme un écart angulaire de quelques degrés (3°) par rapport à 90°, avec la surface d'appui (10) sur l'étrier de fixation (7), et que la surface d'embase (11) sur l'élément de construction (1) voisin du radiateur (4) forme avec la surface de plancher (12) de l'évidement (cadre à profil en U 13) du radiateur (4) un angle de 90°.

10. Dispositif de fixation suivant l'une des revendications précédentes, caractérisé en ce que l'étrier de fixation (7) est réalisé en une pièce de forme en matière plastique qui présente, pour un amortisseur annulaire (8) cylindrique, un ergot de positionnement (15) tourné vers le bas et une surface d'appui (15') inférieure et horizontale, en forme de couronne, concentrique à l'ergot, ainsi qu'un perçage (19) associé comme filetage femelle à une vis autotaraudeuse (vis de serrage 9) dans une aile de l'étrier de serrage (16), pour la fixation desserrable.

Fig. 1

# Fig. 2

# Fig. 3

Fig. 4

27  16  17'  20  23
17                   22
18                9    7
19                              24
                    26              8
11                              14
10                              13
21  24  14           15'
1        28      12              15
                                4
3°

Fig. 5

3°

87°

90°